# EUROPÄISCHE PATENTSCHRIFT

(11) **EP 4 067 050 B1**
(45) Veröffentlichungstag und Bekanntmachung des Hinweises auf die Patenterteilung: **03.04.2024**
(21) Anmeldenummer: 22174843.7
(22) Anmeldetag: 23.02.2017
(51) Int. Cl.: B29C 51/04, B29C 51/26, B29C 65/78

(54) **VERFAHREN ZUM FORMEN UND/ODER KASCHIEREND AUFLEGEN EINES FOLIENELEMENTS**
METHOD FOR FORMING AND / OR LAMINATING A FILM ELEMENT
PROCÉDÉ DE FORMAGE ET/OU DE REVÊTEMENT D'UN ÉLÉMENT FEUILLE

(30) Priorität: 12.06.2016 DE 102016007075; 05.07.2016 DE 102016008095; 18.10.2016 DE 102016012425
(43) Veröffentlichungstag der Anmeldung: 05.10.2022
(62) Teilanmeldung aus: 17716768.1
(73) Patentinhaber: Lisa Dräxlmaier GmbH, 84137 Vilsbiburg (DE)
(72) Erfinder: Rehrl, Hubert, 83317 Teisendorf (DE); Dandl, Andreas, 83395 Freilassing (DE); Jung, Andreas, 88410 Laufen (DE)

(56) Entgegenhaltungen:
- EP-A1- 1 645 398
- WO-A1-2013/026610
- DE-A1-102006 014 303
- US-A- 5 945 059

## Beschreibung

Die Erfindung betrifft darüber hinaus ein Verfahren zum Formen und/oder kaschierend Auflegen eines Folienelements, bei welchem das Folienelement mittels eines Trägerrahmens gegenüber einem Formwerkzeug oder einem zu kaschierenden Bauteil gehalten wird, und bei welchem das Formwerkzeug oder das zu kaschierende Bauteil durch die von dem Folienelement erzeugte Folienebene bewegt wird, um die Kontur des Formwerkzeugs oder des zu kaschierenden Bauteils auf das Folienelement zu übertragen. Beispielsweise ist aus der europäischen Patentanmeldung EP 2 397 308 A2 eine gattungsgemäße Vorrichtung zum Recken und Formen eines Folienzuschnitts bekannt, bei welcher dieser Folienzuschnitt zwischen einem Oberspannrahmen und einem Unterspannrahmen eines Spannrahmens geklemmt ist, und so gegenüber einem Formwerkzeug gehalten wird. Der Spannrahmen kann hierbei translatorisch in x-, y- und z-Richtung, also entlang von drei Raumachsen, verstellt werden und zusätzlich um einen Fixpunkt, also um genau eine Raumachse, gedreht werden, um hinsichtlich eines Formungsprozesses ein Nachgleiten des Folienzuschnitts zu gewährleisten. Ein weiteres Verfahren ist aus der DE 10 2006 014 303 A1 bekannt.

Aus der DE 699 09 835 D2 ist des Weiteren eine Maschine zum Strecken und Vakuumformen einer rechteckigen Tafel aus Plastikmaterial bekannt, wobei die Maschine einen Spannrahmen aus vier Klemmleisten umfasst, mittels welchem jeweils eine Kante der rechteckigen Kunststofftafel festgeklemmt werden kann. Hierbei liegen sich jeweils zwei Klemmleisten paarweise gegenüber, wobei jede Klemmleiste mehrere zweite Klemmvorrichtungen umfasst. Diese zweiten Klemmvorrichtungen sind auf jeder Klemmleiste angebracht und können sich entlang der Klemmleistenlänge mit einem niedrigen Reibkoeffizienten entlang der jeweiligen Klemmleiste bewegen, wobei sie von der Materialtafel hinterhergezogen werden. Insofern bewegen sich die zweiten Klemmvorrichtungen proportional zur Bewegung der Klemmleisten, um Randverwerfungen entgegenzuwirken.

Obwohl die bekannten gattungsgemäßen Vorrichtungen gut funktionieren, kommen sie aufgrund immer komplexer werdender Konturen von Fertigbauteilen und stetig steigenden Qualitätsanforderungen an ihre Grenzen. Dies trifft insbesondere im Zusammenhang mit Verfahren zu, bei welchen Bauteile mit einem Folienelement zu kaschieren sind, wie beispielsweise Fahrzeug-Innenverkleidungsteile.

Der Erfindung liegt daher die Aufgabe zugrunde, gattungsgemäße Verfahren weiter zu entwickeln, so dass einerseits ein Folienelement präziser abgestimmt an eine Kontur eines Formwerkzeugs oder eines zu kaschierenden Bauteils angeschmiegt beziehungsweise angebracht werden kann. Eine weitere Aufgabe der Erfindung liegt darin, Folienmaterial einzusparen, so dass gattungsgemäße Verfahren zum Formen und/oder kaschierend Auflegen wirtschaftlicher durchgeführt werden können. Auch besteht eine Aufgabe der Erfindung darin, qualitativ höherwertigere Produkte herzustellen.

Die Aufgabe wird durch ein Verfahren gemäß Anspruch 1 gelöst.

Zudem ist ein Verfahren zum Formen und/oder kaschierend Auflegen eines Folienelements mit einem Trägerrahmen zum Aufspannen des Folienelements relativ zu einem Formwerkzeug oder einem zu kaschierenden Bauteil, und mit Greifern zum Greifen des Folienelements denkbar, welche gegenüber dem Trägerrahmen beweglich gelagert sind, wobei die Greifer gegenüber dem Trägerrahmen mehraxial verstellbar angeordnet sind, um das Folienelement präziser an einer Kontur des Formwerkzeugs oder des zu kaschierenden Bauteils anzupassen.

Dadurch, dass zumindest einige der Greifer entlang und/oder um mehrere Raumachsen verstellbar, insbesondere an dem Trägerrahmen, angeordnet beziehungsweise befestigt sind, gelingt es, das Folienelement konstruktiv relativ einfach und wesentlich zielgerichteter kontur- bzw. geometrieabhängig zu recken und zu formen, so dass sich das Folienelement insbesondere während eines Reck- und Formprozesses im Allgemeinen beziehungsweise eines Kaschierprozesses im Speziellen signifikant präziser an den Verlauf einer Kontur beziehungsweise Geometrie eines Bauteils oder Formwerkzeugs anschmiegen kann. Hierdurch lässt sich die Qualität des fertigen Produkts nochmals signifikant verbessern.

Die hier beschriebene Verstellbarkeit oder Verlagerbarkeit der Greifer bezieht sich auf eine aktive Bewegung des jeweiligen Greifers, welche im Gegensatz zu einer passiven Bewegung motorisch, also durch einen Antrieb, bedingt ist, wobei nicht alle Greifer aktiv durch einen motorischen Antrieb verstellbar sein müssen, sondern teilweise auch nur passiv verstellbar sein können, beispielsweise durch eine Bewegung des Folienelements, während ein Formwerkzeug bzw. ein zu kaschierendes Bauteil mit dem Folienelement in Kontakt gebracht wird, und/oder durch eine aktive Bewegung des Trägerrahmens.

Insbesondere auch ein gewünschtes definiertes Nachgleiten des Folienelements wird vorliegend signifikant verbessert, so dass das Folienelement differenzierter behandelt bzw. an eine Kontur angepasst werden kann, wodurch die Produktqualität wesentlich erhöht ist.

Vorteilhafterweise können auch Spannkräfte wesentlich besser geregelt werden, mit denen das Folienelement insbesondere gereckt wird.

Mit dem Begriff "mehraxial" ist im Sinne der Erfindung eine multifunktionale räumliche Bewegungsfreiheit des Greifers beschrieben, welche sich durch mehrere translatorische Freiheitsgrade entlang mehrerer Raumachsen formuliert ist. Diese translatorischen Freiheitgrade können kumulativ noch durch einen rotatorischen Freiheitsgrad oder mehrere rotatorische Freiheitsgrade um eine oder mehrere Raumachsen ergänzt sein. Hierbei können eine translatorische Bewegung und eine rotatorische Bewegung eine gemeinsame Raumachse oder unterschiedliche Raumachsen besitzen.

Somit sind Greifer dreidimensional im Raum verstellbar, wodurch sich ein Folienelement im Sinne der Erfindung besonders gut handhaben lässt, insbesondere hinsichtlich eines einfachen Auflegens auf ein zu kaschierendes Bauteil bzw. eines Formens des Folienelements.

Die vorliegende Erfindung bezieht sich hierbei sowohl auf ein allgemeines Kaschieren als auch auf ein Presskaschieren oder ähnlichem.

Der Begriff "Folienelement" umfasst im Sinne der vorliegenden Erfindung jegliche Arten und Formen von Folien, sei es als Bandware von einer Rolle oder als bereits vorkonfektionierte Folienzuschnitte, wobei vorliegend vorkonfektionierte Folienzuschnitte bevorzugt Verwendung finden. Insofern handelt es sich bei dem vorliegenden Folienelement bevorzugt um Folienzuschnitte. Das Folienelement kann etwa auch als eigensteifes Plattenelement oder dergleichen vorliegen. Das Folienelement kann des Weiteren durch unterschiedlichste Materialien realisiert sein, so kann es insbesondere auch durch luftdurchlässige Materialen definiert sein.

Der Begriff "Greifer" beschreibt im Sinne der Erfindung Bauteile oder Bauteilgruppen, mittels welchen das Folienelement, insbesondere Ränder des Folienelements, gegriffen und selbst unter hoher Zugbeanspruchung betriebssicher gehalten werden können. Beispielsweise können Greifer eine Saugeinrichtung umfassen, um das Folienelement im Sinne vorliegender Erfindung zu greifen.

Die vorliegenden Greifer zeichnen sich aber bevorzugt durch wenigstens zwei zueinander verlagerbare Greifflächenteile aus, mittels welchen auch unterschiedliche Greifkräfte bzw. Haltekräfte auf das zu greifende Folienelement ausgeübt werden können.

Diese Greifflächenteile können unterschiedlichst ausgestaltet sein, beispielsweise als schmalere oder breitere Greifnasen.

Der Greifer ist bevorzugt Bestandteil einer kompakter bauenden Greifereinheit, welche in ihrer Gesamtheit bevorzugt vollständig an dem vorliegenden Trägerrahmen angeordnet ist. Eine derartige Greifereinheit kann alle erforderlichen Verstelleinrichtungen zum Verstellen, insbesondere zum räumlichen Verstellen, des Greifers umfassen, ebenso wie einen Antriebsmotor oder mehrere solcher Antriebsmotoren zum Treiben des Greifers.

Der Greifer umfasst bevorzugt wenigstens zwei Greifflächenteile zum Wechselwirken mit dem jeweiligen Folienelement, also zwischen welchen das Folienelement eingeklemmt und so durch den Greifer gegriffen und gehalten werden kann.

Im Sinne der Erfindung kann sich die mehraxiale Verstellbarkeit der Greifer zumindest teilweise oder auch zur Gänze auf die Greifereinheit beziehen, welche dann entsprechend beweglich an dem Trägerrahmen angeordnet ist. Ansonsten ist der Greifer kumulativ oder alternativ in geeigneter Weise vorzugsweise an oder innerhalb der Greifereinheit mehraxial verstellbar gelagert.

Jedenfalls kann das Folienelement mittels der vorliegenden Greifer extrem variantenreich manipuliert werden.

Denkbar ist auch die Bereitstellung einer Vorrichtung zum Recken und/oder Formen und/oder kaschierend Auflegen eines Folienelements mit einem Trägerrahmen zum Aufspannen des Folienelements relativ zu einem Formwerkzeug oder einem zu kaschierenden Bauteil, wobei sich die Vorrichtung durch ein äußeres Lagerrahmenteil auszeichnet, gegenüber welchem der Trägerrahmen wenigstens einaxial, vorzugsweise mehraxial, verstellbar angeordnet ist, um das Folienelement präziser an eine Kontur des Formwerkzeugs oder des zu kaschierenden Bauteils anzupassen.

Dadurch, dass der Trägerrahmen, welcher das zu reckende und/oder umzuformende bzw. aufzulegende Folienelement trägt, zumindest einaxial oder bevorzugt mehraxial innerhalb des Lagerrahmenteils gelagert ist, kann ein Umformprozess beziehungsweise ein Kaschierprozess wesentlich präziser vorgenommen werden, wodurch sich die Qualität des fertigen Produkts nochmals signifikant verbessert.

Unter dem Begriff "einaxial" ist im Sinne der Erfindung eine translatorische oder rotatorische räumliche Bewegungsfreiheit um eine Raumachse verstanden, so dass etwa das Folienelement in seiner Gesamtheit entsprechend gegenüber dem Formwerkzeug oder dem zu kaschierenden Bauteil bewegt bzw. ausrichtbar.

Insbesondere ermöglicht diese Rahmen-in-Rahmen-Lösung auch vorhandene Greifer in ihrer Gesamtheit konstruktiv einfach gleichzeitig zu bewegen bzw. zu verstellen bzw. zu verlagern, sofern der Trägerrahmen mit derartigen Greifern ausgerüstet ist.

Im Allgemeinen kann mittels der vorgeschlagenen Rahmen-in-Rahmen-Lösung der beweglich gelagerte Trägerrahmen an der Vorrichtung, insbesondere an einer Kaschierstation oder dergleichen ausgetauscht werden, beispielsweise wenn der Trägerrahmen auf einen speziellen Folientyp oder an unterschiedlich große Formwerkzeuge bzw. zu kaschierende Bauteile oder dergleichen angepasst werden soll.

Die Vorrichtung zeichnet sich dementsprechend durch einen Außenrahmen und einen Innenrahmen aus, welche zueinander beweglich angeordnet sind.

Insofern ist mit dem vorliegenden äußeren Lagerrahmen eine bequeme und schnelle Anpassung der Vorrichtung nach einem Formwerkzeug- oder Bauteilwechsel erreichbar, da der in dem Lagerrahmenteil gelagerte Trägerrahmen wesentlich unkomplizierter und somit auch schneller an der Vorrichtung austauschen lässt. Vorteilhafterweise muss der Trägerrahmen hierfür nicht aus seiner beweglichen Lagerung herausgelöst werden.

Insofern sind ein Demontage- beziehungsweise Montageaufwand signifikant reduziert und damit ist auch die Bereitschaft gesteigert, den Trägerrahmen, Greifer usw. stets optimal an gegebenenfalls wechselnde Erfordernisse exakt anzupassen. Somit können präziser an einen jeweiligen Reck- und Umformprozess angepasste Trägerrahmen, Greifer oder dergleichen mit geringem Zeitaufwand äußerst unproblematisch bereitgestellt werden.

In diesem Zusammenhang sieht eine bevorzugte Ausführungsvariante auch vor, dass das äußere Lagerrahmenteil mittels eines Wechselmechanismus auswechselbar in der Vorrichtung gelagert ist, wodurch ein Austausch noch einfacher und schneller vorgenommen werden kann.

Während der Trägerrahmen einfach oder mehrfach beweglich gegenüber dem äußeren Lagerrahmenteil beziehungsweise an dem äußeren Lagerrahmenteil befestigt sein kann, kann das äußere Lagerrahmenteil durch wesentlich einfacher konstruierte Lagereinrichtungen in einem Gestell der vorliegenden Vorrichtung festgelegt und somit befestigt sein. Es versteht sich, dass ein derartiger Wechselmechanismus bzw. Schnellwechselmechanismus unterschiedlichst konstruiert sein kann, so dass hierauf vorliegend nicht weiter eingegangen werden muss.

Der Wechselmechanismus bzw. Schnellwechselmechanismus unterscheidet sich hierbei von einer herkömmlichen Befestigung im Wesentlichen dadurch, dass der Wechsel werkzeugfrei erfolgen kann. Mit anderen Worten sind das Lagerrahmenteil, aber auch Greifer bzw. Greifereinheiten derart an der Vorrichtung befestigt, dass sie mittels Schnellspann- oder Schnellklemmeinrichtungen ein- bzw. ausgewechselt werden können, beispielsweise bei einem Formatwechsel.

Beispielsweise umfasst der vorliegende Wechselmechanismus bzw. Schnellwechselmechanismus Formschlussverbindungen, wie nur beispielhaft genannt einfache Steckverbindungen.

An dieser Stelle sei jedoch bereits erwähnt, dass die Merkmale der hier beziehungsweise in den Ansprüchen beschriebenen Lösungen gegebenenfalls auch kombiniert werden können, um die vorliegend erzielbaren Vorteile und Effekte entsprechend kumuliert umsetzen zu können.

Es ist vorteilhaft, wenn die Folienelementebene des Folienelements gegenüber einer Lagerrahmenteilebene des äußeren Lagerrahmenteils zum Lagern des Trägerrahmens verlagerbar ist.

Insbesondere, wenn das Folienelement konstruktiv einfach beispielsweise nur mittels eines Oberrahmenteils und eines Unterrahmenteils des Trägerrahmens geklemmt ist, kann die durch das Folienelement aufgespannte Folienelementebene gegenüber der durch das äußere Lagerrahmenteil erzeugte Lagerrahmenteilebene bewegt werden, wodurch das Folienelement präziser an den Konturverlauf eines Formwerkzeugs oder eines zu kaschierenden Bauteils angepasst werden kann.

In diesem Zusammenhang ist es auch besonders vorteilhaft, wenn der Trägerrahmen gegenüber einem äußeren Lagerrahmenteil mit wenigstens einem oder mehr, vorzugsweise mit sechs, Freiheitsgrade räumlich verstellbar ist. Hierdurch sind alle von dem Trägerrahmen getragenen Greifer gemeinsam räumlich bewegbar bzw. verstell- bzw. verlagerbar.

Während ein Freiheitsgrad relativ einfach etwa durch eine Rotationsachse realisiert sein kann, können mehrere Freiheitsgrade beispielsweise mit mehreren Stellmotoren oder dergleichen verwirklicht sein, mittels welchen der Trägerrahmen an dem äußeren Lagerrahmenteil beweglich befestigt ist.

Mit zunehmender Anzahl an Freiheitsgrade kann der Trägerrahmen gegenüber einer Kontur eines Formwerkzeugs oder eines zu kaschierenden Bauteils präziser ausgerichtet werden, jedoch steigt mit zunehmender Anzahl an Freiheitsgrade auch die Komplexität der Lagermechanik gegenüber dem äußeren Lagerrahmenteil.

Oftmals reicht bereits ein Freiheitsgrad des Trägerrahmens gegenüber dem äußeren Lagerrahmenteil, beispielsweise eine Rotationsbewegung um eine Raumachse, insbesondere wenn der Trägerrahmen kumulativ mit mehraxial beweglichen Greifern im Sinne der Erfindung ausgerüstet ist.

Jedoch kann das Erfordernis an eine multifunktionale räumliche Bewegungsfreiheit der Greifer vereinfacht werden beziehungsweise konstruktiv einfach gehalten werden, wenn der Trägerrahmen etwa bereits zwei Freiheitsgrade gegenüber dem äußeren Lagerrahmenteil aufweist. Beispielsweise ist der Trägerrahmen sowohl translatorisch entlang einer Raumachse bewegbar als auch rotatorisch um diese Raumachse, oder der Trägerrahmen ist um zwei Raumachsen rotatorisch bewegbar an dem äußeren Lagerrahmenteil gelagert.

Eine besonders bevorzugte Ausführungsvariante sieht jedoch vor, dass Greifer zum Greifen des Folienelements gegenüber dem Trägerrahmen und/oder dem äußeren Lagerrahmenteil mit wenigstens zwei oder mehr, vorzugsweise sechs, Freiheitsgrade räumlich verstellbar ist. Es versteht sich, dass das Folienelement hierdurch äußerst präzise an eine Kontur angeschmiegt werden kann, wodurch besonders komplexe Reck- und Umformprozesse bezüglich des Folienelements möglich sind.

Diese Komplexibilität kann nochmals gesteigert werden, wenn Greifer zum Greifen des Folienelements gemeinsam von dem Trägerrahmen getragen sind, wobei insbesondere der Trägerrahmen im Raum rotatorisch und/oder translatorisch verlagerbar angeordnet ist. Baulich besonders einfach kann dies realisiert werden, wenn der Trägerrahmen entsprechend beweglich innerhalb eines äußeren Lagerrahmenteils gelagert angeordnet ist, wie dies beispielhaft vorstehend bereits beschrieben ist.

Das Folienelement kann darüber hinaus besonders präzise an eine Kontur eines Formwerkzeugs oder eines zu kaschierenden Bauteils angepasst werden, wenn Greifer zum Greifen des Folienelements individuell aktiv ansteuerbar sind. Die Greifer sind hierbei individuell aktiv ansteuerbar an dem Trägerrahmen angeordnet.

Die Begrifflichkeit "aktiv ansteuerbar" beschreibt vorliegend, dass Greifer motorisch angetrieben sind, wodurch sie sich von passiven Greifern unterscheiden, welche etwa lediglich durch mittels des Folienelements auf sie wirkenden Zugkräften oder dergleichen bewegt werden, wobei auch dies vorliegend mittels einer geeigneten "Leerlauffunktion" eines Greifers möglich ist.

Durch aktiv ansteuerbare Greifer gelingt es vorliegend jedoch gezielt, Greifer multiaxial aktiv zu bewegen, so dass Greifer mit mehreren Freiheitsgraden motorisch bewegt werden können.

Beispielsweise gelingt es hierdurch, ein Folienelement bereits zu behandeln, bevor das Formwerkzeug beziehungsweise das zu kaschierende Bauteil durch die Folienelementebene hindurch gefahren wird, dass Bereiche des Folienelements in flacheren Gebieten der Kontur mehr gereckt werden als Bereiche des Folienelements in Gebieten, in welchen die Kontur wesentlich höher ausgebildet ist, da in diesen höher ausgebildeten Gebieten mehr Folienmaterial zur Verfügung stehen sollte, als in flacheren Gebieten der Kontur.

Insbesondere auf die Masse an herzustellenden Formbauteilen oder zu kaschierenden Bauteilen bezogen können hierdurch große Mengen an Folienmaterial eingespart werden, wodurch die Herstellung solcher Produkte wesentlich günstiger erfolgen kann.

Darüber hinaus ergeben sich qualitativ höherwertigere Produkte, da das Folienelement präziser an die jeweilige Kontur angepasst werden kann, wie bereits vorstehend mehrfach erläutert.

Erzielt wird diese sehr gute partielle Anpassbarkeit im Wesentlich durch signifikant verbesserte Nachgleitmöglichkeiten aufgrund der individuell ansteuerbaren Greifer, insbesondere auch in Kombination mit dem verstellbaren Trägerrahmen, welcher in einem bevorzugt schnell wechselbaren äußeren Lagerrahmenteil gelagert ist.

So ist es auch vorteilhaft, wenn Greifer in Abhängigkeit von anderen Greifern individuell aktiv ansteuerbar sind. Insbesondere können Greifer mit einer auf die Bewegung anderer Greifer abgestimmten Geschwindigkeit verfahren oder beschleunigt werden.

In diesem Zusammenhang ist es weiter vorteilhaft, wenn sich gegenüberliegend angeordnete, insbesondere sich kopfseitig gegenüberliegend angeordnete, Greifer individuell aktiv ansteuerbar sind, wodurch sich weitere Möglichkeiten zur individuellen und partiellen Manipulation des Folienelements ergeben.

Ferner ist es vorteilhaft, wenn Greifer paarweise oder gruppenweise Greifer individuell aktiv ansteuerbar sind. Hierdurch können selbst größere Bereiche des Folienelements partiell gereckt werden. Oder erste Greifer recken das Folienelement partiell, während andere Greifer den auf das Folienelement wirkenden Zugkräften nachgeben.

Weitere besonders vorteilhafte Manipulationsmöglichkeiten ergeben sich auch durch folgende Merkmale.

Darüber hinaus ist es vorteilhaft, wenn Greifer in Abhängigkeit von einer Raumlage des Trägerrahmens individuell aktiv ansteuerbar sind. Hierbei können Greifer unterschiedlich angesteuert werden, insbesondere wenn der Trägerrahmen eine Lageveränderung im Raum erfährt, so dass beispielsweise erste Greifer das Folienelement partiell recken, während andere Greifer den auf das Folienelement wirkenden Zugkräften nachgeben. Ebenso ist es von Vorteil, wenn Greifer in Abhängigkeit von einer Kontur bzw. Geometrie des Formwerkzeugs oder des zu kaschierenden Bauteils individuell aktiv ansteuerbar sind.

Auch, wenn Greifer in Abhängigkeit von einem Folienmaterial des Folienelements individuell aktiv ansteuerbar sind, können vorteilhafte Effekte erzielt oder verstärkt werden. Sind Greifer zum Greifen des Folienelements kumulativ zeitlich individuell ansteuerbar, kann das Folienelement zum Beispiel auch während eines Umform- beziehungsweise eines Kaschierprozesses mittels Greifer noch insbesondere partiell manipuliert werden, so dass das Folienelement bereichsweise zu unterschiedlichen Zeitpunkten gereckt werden kann; etwa wenn es sich in anderen Bereichen bereits teilweise an die Kontur angeschmiegt hat.

Beispielsweise starten Bewegungen von Greifern jeweils zu unterschiedlichen Zeiten und/oder zuvor gestoppte Bewegungen von Greifern setzen zu unterschiedlichen Zeiten erneut ein.

Eine verbesserte Vorbereitung beziehungsweise Anpassung des Folienelements an eine Kontur kann beispielsweise dadurch erzielt werden, wenn Greifer zum Greifen des Folienelements gegenüber der Folienelementebene neigbar sind.

Durch diese Neigbarkeit kann das Folienelement mittels eines Greifers oder auch mehrerer Greifern partiell aus der ursprünglichen Folienelementebene herausverlagert werden, so dass eine verbesserte partielle Anpassung des Folienelements an eine Kontur gewährleistbar ist.

Eine derartige Neigbarkeit der Greifer gegenüber der Folienelementebene kann konstruktiv einfach dadurch erzielt werden, dass die Greifer neigbar beziehungsweise kippbar an dem Trägerrahmen angeordnet sind, wodurch sie auch neigbar gegenüber einer von dem Trägerrahmen fiktiv aufgespannte Trägerrahmenebene sind.

Darüber hinaus ist es vorteilhaft, wenn Greifer zum Greifen des Folienelements gegenüber der Folienelementebene drehbar sind.

Beispielsweise sind Greifer derart an dem Trägerrahmen angeordnet, dass sie um eine Raumachse bzw. Drehachse gedreht werden können, wobei diese Raumachse beispielsweise parallel, senkrecht oder irgendwie winkelig zu einer fiktiv von dem Trägerrahmen aufgespannten Trägerrahmenebene ausgerichtet ist. Insofern können Greifer gegenüber dieser fiktiv von dem Trägerrahmen aufgespannten Trägerrahmenebene neigbar sein.

Mittels einer derartigen Drehbarkeit ist ebenfalls ein partielles Aufbringen von zusätzlichen Zugkräften innerhalb des Folienelements gewährleistet, wodurch dieses beispielsweise partiell besser gereckt werden kann.

Des Weiteren ist es vorteilhaft, wenn Greifer zum Greifen des Folienelements gegenüber der Folienebene individuell höheneinstellbar sind, da auch mittels einer derartigen individuellen Höheneinstellbarkeit das Folienelement partiell unterschiedlichst an die Gegebenheiten der jeweiligen Kontur eines Formwerkzeugs oder eines zu kaschierenden Bauteils angepasst werden kann.

Beispielsweise sind Greifer einzeln oder in ihrer Gesamtheit individuell höhenverstellbar an dem Trägerrahmen angeordnet.

Hierdurch ergibt sich auch eine individuelle Höhenverstellbarkeit der Greifer gegenüber einem eventuell vorhandenen Lagerrahmenteil.

Ferner ist es vorteilhaft, wenn Greifer zum Greifen des Folienelements individuell beschleunigbar sind, so dass das Folienelement bereichsweise schneller oder langsamer behandelt bzw. insbesondere gereckt werden kann, wodurch es präziser an eine Kontur angepasst werden kann.

Kumulativ oder alternativ ist es auch möglich, dass Greifer mit unterschiedlichen Geschwindigkeiten bewegt werden, um entsprechende Effekte zu erzielen.

Darüber hinaus sieht eine weitere bevorzugte Ausführungsvariante vor, dass mittels der Greifer zum Greifen des Folienelements erzeugbare Greifkräfte individuell erzeugbar und veränderbar sind. Beispielsweise können hierdurch erste Bereiche des Folienelements weniger fest klemmend ergriffen werden als andere Bereiche des Folienelements, so dass das Folienelement an den Bereichen mit weniger stark erzeugten Klemmkräfte überhaupt oder eher relativ zu dem Greifer gleiten kann, wodurch Effekte ähnlich wie beim Verlagern des jeweiligen Greifers erzeugt oder verstärkt werden können.

Vorteilhafterweise weist die Vorrichtung eine Vielzahl an Verstelleinrichtungen zum räumlichen Verstellen von Greifern und/oder des Trägerrahmens auf. Sind mehrere solcher Verstelleinrichtungen vorhanden, kann eine hohe Präzision etwa hinsichtlich Verstellvorgänge usw. erzielt werden.

Hierbei sind Verstelleinrichtungen bzgl. der Greifer an dem Trägerrahmen angeordnet. Verstelleinrichtungen zum Bewegen bzw. Verstellen bzw. Verlagern des Trägerrahmens in Bezug auf das äußere Lagerrahmenteil können sowohl dem Trägerrahmen als auch dem äußeren Lagerrahmenteil zugeordnet sein.

Die Verstelleinrichtungen können konstruktiv unterschiedlichst ausgestaltet sein, beispielsweise durch Pneumatik- oder Hydraulikzylinder oder durch elektrische Motoren oder dergleichen.

Von besonderem Vorteil ist es, wenn sich die Vorrichtung durch Antriebsmotoren zum Treiben von Greifern und/oder des Trägerrahmens auszeichnet.

Auch die elektrischen Antriebsmotoren können unterschiedlichster Natur sein, wobei sie beispielsweise durch Linearmotoren realisiert sein können.

Hierbei können Stellmotoren für eine Stufenverstellung von Greifern oder des Trägerrahmens vorgesehen sein, aber auch Servomotoren für eine stufenlose Ansteuerung beziehungsweise Verstellung von Greifern und/oder des Trägerrahmens sind möglich. Es versteht sich, dass eine Vielzahl an unterschiedlichst ausgestalteten Verstelleinrichtungen beziehungsweise Antriebsmotoren vorgesehen sein können, um gewünschte Freiheitsgrade an den Greifern beziehungsweise an dem Trägerrahmen zu verwirklichen.

Insofern können vorliegend unterschiedlichste Raumlagen der Greifer beziehungsweise des Trägerrahmens realisiert werden.

Es versteht sich, dass jeder Greifer mit einem eigenen Antriebsmotor beziehungsweise mit einer eigenen Verstelleinrichtung ausgerüstet sein kann.

Andere Konzepte können aber auch vorsehen, dass zwei oder mehr Greifer, insbesondere unmittelbar nebeneinander angeordnete Greifer mittels einem einzigen Antriebsmotor individuell aktiv ansteuerbar sind, wenn zwischen den jeweiligen Greifern und dem Antriebsmotor ein oder mehrere geeignete Getriebeeinheiten vorgesehen sind. In diesem Fall sind die Greifer nicht unmittelbar mit einem elektrischen Antriebsmotor wirkverbunden, sondern mit Hilfe eines zwischengeschalteten Getriebes mittelbar.

Die elektrischen Antriebsmotoren können Bestandteil einer Greifereinheit sein, wobei hinsichtlich einer bevorzugten Ausführungsvariante vorgesehen ist, dass die Antriebsmotoren an dem Trägerrahmen angeordnet und vorzugsweise schwimmend gelagert sind. Hierdurch kann die Komplexität einer Greifereinheit reduziert werden, und die Antriebsmotoren sind darüber hinaus von außen gut zugänglich.

An dieser Stelle sei noch erwähnt, dass sich die vorliegend offenbarte individuelle aktive Verstellbarkeit auch auf gesamte Greifereinheiten beziehen kann, welche den jeweiligen Greifer umfassen.

Darüber hinaus ist es vorteilhaft, dass insbesondere mittels der Vorrichtung eine gleichmäßigere Dehnung eines insbesondere erwärmten Folienelements oder auch eines Plattenelements selbst bei stark zerklüfteten Formen oder zu kaschierenden Bauteilen möglich ist.

So ist es kumulativ eine Vorrichtung vorteilhaft, welche durch einen das Formwerkzeug oder das zu kaschierende Bauteil zumindest teilweise umgebenden und in Höhenrichtung über das Formwerkzeug oder das Bauteil hinaus ausfahrbaren zusätzlichen Vorstreckrahmen umfasst. Durch diesen zusätzlichen Vorstreckrahmen, der das erwärmte Folienelement dehnen kann, wird im Gegensatz etwa zu einem Vorblasen eine viel gleichmäßigere Dehnung desjenigen Folienelementbereichs erreicht, welcher sich erst zu einem späteren Zeitpunkt an das Formwerkzeug oder das Bauteil anlegen soll.

Der zusätzliche Vorstreckrahmen kann auch ein Blechschwertelement umfassen, wobei der zusätzliche Vorstreckrahmen oder das Blechschwertelement vorauseilend aus einem Werkzeug herausfahren kann, um so einen bestimmten Bereich des Folienelements vordehnen zu können. Mit den vorliegenden Greifern ergeben sich noch mehr zusätzliche Einstellmöglichkeiten für einen entsprechenden Prozess.

Ein das Formwerkzeug oder Bauteil nur teilweise umgebender zusätzlicher Vorstreckrahmen ist dann vorteilhaft, wenn Erhebungen im Formwerkzeug oder im zu kaschierenden Bauteil sich nur über einen Teilbereich erstrecken.

Zusätzlich zur Anwendung eines zusätzlichen Vorstreckrahmens kann entweder unterhalb des Trägerrahmens bzw. Lagerrahmenteils ein Vorblaskasten oder oberhalb des Trägerrahmens bzw. Lagerrahmenteils eine Vorsaugglocke vorgesehen sein, um das Folienelement vorzudehnen.

Sind dagegen solche Erhebungen über das gesamte Formwerkzeug oder das gesamte zu kaschierende Bauteil verteilt, so ist es zweckmäßig und vorteilhaft, wenn der zusätzliche Vorstreckrahmen rundumlaufend und geschlossen ist und das Formwerkzeug oder das Bauteil vollständig umfasst. Hierdurch ist gewährleistet, dass über die gesamte Fläche des Formwerkzeuges oder des Bauteiles eine gleichmäßige Dehnung des Folienelements eintritt.

Diesbezügliche Versuche haben ergeben, dass bei dem Stand der Technik eine Foliendehnung von mehr als 100 % eintrat, während bei Anwendung des zusätzlichen Vorstreckrahmens eine Foliendehnung von 70-80% gemessen wurde.

Ein Vorblasen oder Vorsaugen kam nicht zur Anwendung und ist häufig nicht notwendig. Trotzdem kann es Anwendungsfälle geben, bei denen bei der Verwendung eines rundumlaufend geschlossenen zusätzlichen Vorstreckrahmens die Anwendung eines Vorblaskastens oder einer Vorsaugglocke zweckmäßig sein kann.

Denkbar ist auch die Bereitstellung eines Verfahrens zum Formen und/oder kaschierend Auflegen eines Folienelements, bei welchem das Folienelement mittels eines Trägerrahmens gegenüber einem Formwerkzeug oder einem zu kaschierenden Bauteil gehalten wird, und bei welchem das Formwerkzeug oder das zu kaschierende Bauteil durch die von dem Folienelement erzeugte Folienebene bewegt, um eine Kontur des Formwerkzeugs oder des zu kaschierenden Bauteils auf das Folienelement zu übertragen, wobei die Greifer gegenüber dem Trägerrahmen translatorisch entlang wenigstens zwei Raumachsen und/oder rotatorisch um wenigstens eine Raumachse verlagert werden, und/oder der Trägerrahmen gegenüber einem Lagerrahmenteil rotatorisch um wenigstens eine Raumachse und/oder translatorisch entlang wenigstens einer Raumachse verlagert wird, um das Folienelement an die Kontur verlagert wird, um das Folienelement präziser an die Kontur des Formwerkzeugs oder des zu kaschierenden Bauteils anzupassen.

Hierbei spielt es keine Rolle, ob es sich um dieselbe Raumachse oder voneinander verschiedene Raumachsen handelt.

Jedenfalls können mit diesem Verfahren Folienelemente wesentlich präziser an unterschiedlichste Konturen von Formwerkzeugen oder zu kaschierenden Bauteilen angepasst werden.

Greifer beziehungsweise der Trägerrahmen können zu unterschiedlichen Zeitpunkten des Verfahrens individuell aktiv bewegt werden.

Eine bevorzugte Verfahrensvariante sieht vor, dass Greifer und/oder der Trägerrahmen translatorisch und/oder rotatorisch verlagert werden, während und/oder nachdem das Formwerkezug oder das zu kaschierende Bauteil durch die Ebene des Folienelements hindurch bewegt wird. Hierdurch kann das Folienelement noch individueller an die Erfordernisse des Reck- beziehungsweise Umform- oder Kaschierprozesses angepasst werden.

Eine weitere besonders vorteilhafte Verfahrensvariante sieht vor, dass Greifer und/oder der Trägerrahmen mittels des äußeren Lagerrahmenteils ausgewechselt werden, wodurch unterschiedliche Greifer beziehungsweise unterschiedliche Trägerrahmen individuell auf verschiedene Folienelemente beziehungsweise auf unterschiedlichste Formwerkzeuge oder zu kaschierende Bauteile leichter umgestellt werden können.

Das Verfahren zeichnet sich bevorzugt dadurch aus, dass Greifer beziehungsweise der Trägerrahmen individuell aktiv angesteuert werden, um das Folienelement präziser an eine Kontur eines Formwerkzeugs oder eines zu kaschierenden Bauteils anzupassen.

Wie vorstehend bereits beschrieben, können Greifer zeitlich individuell angesteuert werden, so dass sie sich beispielsweise zu unterschiedlichen Zeiten bewegen und/oder sich nach einem Bewegungsstopp weiterbewegen, sie unterschiedlich beschleunigt werden und/oder sie mit unterschiedlichen Geschwindigkeiten bewegt werden.

Hierzu können Greifer rotatorisch wie auch translatorisch um eine oder mehrere Raumachsen bewegt werden, wobei unter einer rotatorischen Bewegung neben dem Drehen auch ein Neigen von Greifern zu verstehen ist.

Insbesondere können Greifer eine Strecke, insbesondere eine vorgegebene Strecke mehrstufig abfahren, um einen individuellen zeitlichen Eingriff beziehungsweise ein individuelles zeitliches Wirken auf das Folienelement zu erzielen.

Darüber hinaus ist es vorteilhaft, wenn Greifer ihre Greif- beziehungsweise Haltekräfte individuell variieren können; das heißt sie festigen oder lockern ihre auf das Folienelement wirkenden Klemmkräfte beziehungsweise Presskräfte zwischen den Greifflächenteilen der Greifer.

Beispielsweise verläuft eine Raumachse, entlang welcher ein Greifer translatorisch bewegt beziehungsweise um welche ein Greifer rotatorisch herum bewegt werden kann, quer zu der Längsachse eines Rahmenteil des Trägerrahmens, an welchem dieser Greifer angeordnet ist.

Das Einstellen von individuellen Greifkräften ist besonders vorteilhaft hinsichtlich Folienelemente, welche eine genarbte Oberfläche aufweisen, so dass selbst Folienelemente mit genarbten Oberflächen problemlos zwischen zwei Greifflächenteile eines Greifers gleiten können, wenn Greifkräfte entsprechend reduziert werden.

Um das Folienelement partiell auf eine andere Weise manipulieren zu können, ist es vorteilhaft, wenn ein Greifer oder eine Gruppe von Greifern in Abhängigkeit von wenigstens einem weiteren Greifer individuell aktiv angesteuert werden.

Das Folienelement kann partiell noch präziser reckt werden, wenn Greifer in Abhängigkeit von einer Raumlage oder einer räumlichen Verlagerung des Trägerrahmens räumlich verlagert werden.

Die Qualität des fertigen Produkts kann weiter verbessert werden, wenn Greifer in Abhängigkeit von einem Folienmaterial des Folienelements individuell aktiv angesteuert werden.

Eine weitere bevorzugte Verfahrensvariante sieht vor, dass Greifer derart individuell aktiv angesteuert werden, dass Bereiche des Folienelements partiell vorgestreckt werden und/oder partiell nachgleiten, so dass das Folienelement besonders gut an ein Formwerkzeug bzw. an ein zu kaschierendes Bauteil angebracht werden kann.

Ferner kann das Verfahren vorteilhaft weiterentwickelt werden, wenn der Trägerrahmen in Abhängigkeit von einer räumlichen Verlagerung von Greifern räumlich verlagert wird, da sich hierdurch das Verfahren weiter präzisieren lässt.

Werden Greifer in Abhängigkeit von einer Kontur bzw. Geometrie des Formwerkzeugs oder des zu kaschierenden Bauteils individuell aktiv angesteuert, können die Greifer das Folienelement partiell verbessert manipulieren, sprich insbesondere recken.

Denkbar ist auch die Bereitstellung einer Kaschierstation zum Kaschieren eines Bauteils mit einem Folienelement, wobei sich die Kaschierstation durch eine Vorrichtung nach einem der hier beschriebenen Merkmale auszeichnet.

Durch den Einsatz der Vorrichtung an einer Formstation im Allgemeinen, wie an der Kaschierstation im Speziellen können mit einem Folienelement kaschierte Bauteile, insbesondere Kfz-Innenverkleidungsteile, extrem präzise und somit mit einer äußerst hohen Qualität hergestellt werden.

Denkbar ist auch die Bereitstellung einer Anlage zum Kaschieren eines Bauteils, insbesondere eines Kfz-Innenverkleidungsteils, mit einem Folienelement, wobei die Anlage eine Kaschierstation aufweist, und die Kaschierstation einen Trägerrahmen mit einer Vielzahl an Greifern zum Greifen des Folienelements umfasst, wobei die Anlage eine Controllereinheit aufweist, welche derart mit wenigstens einem der Greifer wirkverbunden ist, dass die Controllereinheit vor und/oder während des Kaschierens des Bauteils mit dem Folienelement den wenigstens einen Greifers hinsichtlich seiner räumlichen Bewegung und/oder seiner Haltekräfte ansteuert.

Dadurch, dass Greifer zum Greifen des Folienelements in dieser Art mittels der Controllereinheit angesteuert werden können, können Kaschierprozesse an gattungsgemäßen Anlagen wesentlich differenzierter, also nochmals exakter als bisher, durchgeführt werden, wodurch insbesondere eine Optimierung hinsichtlich eines Materialverbrauchs und einer Kaschierqualität erzielt ist.

Eine geeignete Controllereinheit kann hierbei vielfältig ausgestaltet sein, insbesondere mittels einer Kombination aus Software und Hardware.

Mittels dieser Controllereinheit können aktive Bewegungen von Greifern und/oder des Trägerrahmens nicht nur gesteuert, sondern darüber hinaus auch komplex untereinander geregelt werden, um das Folienelement differenzierter manipulieren zu können.

Mittels der Controllereinheit ist bevorzugt auch eine menügesteuerte Anpassung an Folienzuschnitten beim Umrüsten der Vorrichtung, insbesondere der Kaschierstation bzw. der Anlage, etwa bei einem Formatwechsel oder ähnlichem möglich.

Es ist jedoch auch möglich, diese menügesteuerte Anpassung durch andere geeignete computerunterstützte Einrichtungen zu bewerkstelligen.

Unter einer menügesteuerten Anpassung ist im Sinne der Erfindung verstanden, dass ein entsprechender Datensatz - voreingestellt, vom Modell, über Scanner oder dergleichen - geladen, wobei sich insbesondere Greifer, aber auch kumulativ oder alternativ der Trägerrahmen, auf eine erforderliche bzw. gewünschte Formatgröße automatisch justieren.

Alternativ können Zuschnittmaße oder dergleichen auch über eine geeignete Schnittstelle händisch von einem Bedienpersonal in eine Steuerung usw. eingegeben werden. Es versteht sich, dass die Controllereinheit der Vorrichtung oder der Kaschierstation oder der Anlage zugeordnet sein kann, um Greifer und Trägerrahmen im Sinne der Erfindung individuell ansteuern zu können.

Es sei hier noch darauf hingewiesen, dass die hier verwendeten Begriffe "Verstellen", "Verlagern" bzw. "Bewegen" werden im Sinne vorliegender Erfindung synonym verwendet.

An dieser Stelle sei noch darauf hingewiesen, dass die Erfindung nicht nur die beschriebene Vorrichtung, das beschriebene Verfahren, die beschriebene Kaschierstation und die beschriebene Anlage betrifft, sondern darüber hinaus auch ein hiermit hergestelltes Produkt.

Bei einem derartigen Produkt kann es sich beispielsweise um Badewannen, Kühlschrankinnenbehälter oder dergleichen handeln.

Vorliegend können entsprechende Folienzuschnitte (Folienelemente), welche insbesondere unter Zuhilfenahme von Vakuumformen behandelt werden, vor dem Verformen biaxial besonders präzise gereckt werden, wodurch etwa die Foliendicke in besonders präzise definierten Bereichen bereits vor dem Verformen dünner oder dicker gestaltet werden kann.

Insbesondere bei der Herstellung von Fahrzeuginnenteilen, wie Instrumententafeln, Türseitenverkleidungen oder dergleichen, kann vorliegend äußerst präzise auf den Auszugsgrad der Oberflächenstruktur eingewirkt werden.

Vorliegend ist es weiter vorteilhaft, wenn während des Verformens und/oder in einem nachgelagerten Schritt eine Formhilfe eingesetzt wird, welche von außen auf das Folienelement wirken kann, während ein Formwerkzeug oder ein zu kaschierendes Bauteil von innen wirkt.

Gemäß dem erfindungsgemäßen Verfahren wird mindestens eine Markierung eines erwärmten Folienelements innerhalb der Vorrichtung bzw. Kaschierstation durch einen dieser Markierung zugeordneten am Einlauf und einen dieser Markierung zugeordneten am Auslauf der Formstation angeordneten Sensor erfasst, worauf die Regelsignale der Sensoren eine Relativverschiebung von Folienelement und dem Formwerkzeug oder dem zu kaschierenden Bauteil innerhalb der Vorrichtung bzw. Kaschierstation herbeiführen, so dass insbesondere ein Arbeiten mit einem Inline-Verfahren, das heißt mit einer absatzweise transportierten, insbesondere zusammenhängenden, Folie vereinfacht.

Vorteilhafterweise kann hierdurch mittels der Greifer insbesondere ein zweifarbiger Zuschnitt noch exakter positioniert werden, wobei speziell die Position einer Farbtrennlinie mittels der vorliegenden Greifer besonders exakt beeinflusst werden kann.

Falls erforderlich, kann zuvor die Lage der Markierung mittels eines Sensors erfasst und in Bezug auf eine entsprechend ausgestattete Transporteinrichtung ausgerichtet werden.

Hierbei kann zunächst die Markierung so ausgerichtet werden, dass bereits durch die Transporteinrichtung eine einigermaßen genaue Zuordnung von markiertem Folienelement zu dem Formwerkzeug oder dem zu kaschierenden Bauteil herbeigeführt werden kann. In der vorliegenden Vorrichtung bzw. Kaschierstation wird dann noch nach dem Erwärmen des Folienelements eine genaue Ausrichtung durch am Anfang und am Ende der Vorrichtung bzw. Kaschierstation angeordnete Sensoren herbeigeführt, da sich durch die Erwärmung die genaue Zuordnung der Markierung zum Formwerkzeug oder zum Bauteil verändern kann.

Im weiteren Arbeitsverlauf wird das Folienelement im eigentlichen Arbeitsbereich der Vorrichtung bzw. der Kaschierstation dann, wie vorstehend beschrieben, eingespannt und einem Verformvorgang unterworfen, worauf die Lage der Markierung nach dem Verformen durch mindestens einen Sensor überwacht und bei Bedarf korrigiert wird.

In weiterer vorteilhafter Ausgestaltung kann die Korrektur der Lage der Markierung durch Festhalten des Folienelements im kontrollierten Bereich und entsprechende Verschiebung des Folienelements zusammen mit Festhaltemitteln, wie etwa die vorliegenden Greifer, bei unveränderter Einspannung erfolgen.

Eine Verschiebung des Folienelements zur Korrektur der Lage der Markierung erfolgt also unter Einbeziehung der Festhaltemittel bzw. insbesondere Greifer, so dass eine Veränderung des Folienelements in ihrer eingespannten Lage über die Festhaltemittel bzw. Greifer nicht mehr erfolgt.

Die Korrektur der Lage der Markierung kann in Weiterbildung der Erfindung durch Verschieben des Formwerkzeugs oder des zu kaschierenden Bauteils erfolgen, wenn dies konstruktiv einfacher zu lösen ist als die Verschiebung der Transporteinrichtung zusammen mit der Folie.

Zur Vervollständigung des Arbeitsvorganges kann nach dem Ausrichten der Markierung des Folienelements unter Beibehaltung ihrer ausgerichteten Lage in ein Formwerkzeug verformt, und im Falle eines Kaschiervorganges das Bauteil in das vorgeformte Folienelement eingebracht und mit diesem vereinigt werden.

Das erläuterte erfindungsgemäße Verfahren ist immer dann anwendbar, wenn das Folienelement durch die Markierung in mindestens zwei Oberflächenbereiche unterteilt ist. Dies können beispielsweise durch eine scharfe Linie getrennte unterschiedliche Farbbereiche sein. Die Markierung kann aber auch eine Farbmarkierung sein, die sich von der übrigen Farbgestaltung des Folienelements abhebt.

Ferner kann die Markierung auch eine Blindprägung sein, das heißt das Folienelement kann eine Vertiefung oder eine Erhebung aufweisen, durch welche die Markierung gebildet ist, ohne dass eine farbliche Veränderung vorliegt.

Die Markierung kann quer oder schräg zur Folienlaufrichtung kontinuierlich fortlaufend sein; es ist aber auch möglich, dass die Markierung in Folienlaufrichtung kontinuierlich fortlaufend ist.

Das erfindungsgemäße Verfahren kann problemlos mit einer Vorrichtung mit einer Transporteinrichtung durchgeführt werden, wenn am Anfang der Transporteinrichtung eine Regeleinrichtung für die Erkennung der Markierung und das Ausrichten des Folienelements in Bezug auf die Transporteinrichtung vorgesehen ist, dass am Einlauf und Auslauf der Vorrichtung bzw. einer Formstation jeweils mindestens ein Klemmbalken oder Greifer sowie jeweils ein auf die Markierung ansprechender Sensor vorgesehen sind, und dass auf Signale der Sensoren ansprechende Stelleinrichtungen für eine Relativverschiebung des eingeklemmten Folienelements gegenüber dem Formwerkzeug oder dem zu kaschierenden Bauteil angeordnet sind.

Die Genauigkeit der Lage der Markierung in Bezug auf das Formwerkzeug oder das Bauteil ist umso grösser, je kleiner das Formwerkzeug oder das zu kaschierende Bauteil ist.

Bei dem erfindungsgemäßen Verfahren wird ausgehend von einem gegenüber dem Formwerkzeug oder dem Bauteil ausgerichteten Zustand der Markierung das Folienelement einem Verformvorgang unterworfen, worauf die Lage der Markierung durch mindestens einen Sensor überwacht und bei Bedarf korrigiert wird. Hierbei wird also von einem Verfahrenszustand ausgegangen, bei dem das Folienelement etwa gegenüber der Transporteinrichtung bereits ausgerichtet ist und wobei das Folienelement auch in der Vorrichtung bzw. Formstation oder Kaschierstation schon zumindest in annähernder Weise gegenüber dem Formwerkzeug oder dem zu kaschierenden Bauteil ausgerichtet ist. Hierbei erfolgt also die Korrektur der Markierung vor und während eines Verformvorgangs, also nachdem das erwärmte Folienelement mit ihrer Markierung bereits gegenüber dem Formwerkzeug oder dem Bauteil ausgerichtet ist. Insofern kann also eine Korrektur der Lage der Markierung gegenüber dem Formwerkzeug oder dem Bauteil bewirkt werden, sofern eine Verschiebung durch den Verformvorgang eingetreten ist.

Besonders vorteilhaft ist es, dass hierdurch ein vereinfachtes Einlegen des Folienelements sowie ferner eine besonders exakte Positionierung von Nähten, Farbbereichen oder dergleichen erzielt werden kann.

Vorzugsweise erfolgt die Korrektur der Lage der Markierung durch Festhalten des Folienelements im kontrollierten Bereich und entsprechende Verschiebung des Folienelements in sich bei unveränderter Einspannung. Bei einer solchen Korrektur handelt es sich um eine Art Feinkorrektur, bei der die Markierung unter Ausnutzung des verformbaren Zustandes des Folienelements verschoben wird, ohne dass eine Einspannung geändert wird, das heißt die Markierung wird aufgrund der Verformbarkeit des Folienelements innerhalb des Folienelements verschoben, ohne dass der gesamte Folienbereich verschoben wird, was bereits vorher in einem vorhergehenden hier nicht dargestellten Verfahrensschritt vorgenommen wurde und was eine Art Grobkorrektur darstellt.

Sofern diese Verschiebung in sich nicht den erwünschten Erfolg herbeiführen kann, kann nach einer anderen Ausgestaltung die Korrektur der Lage der Markierung durch Verschieben des Formwerkzeuges oder des zu kaschierenden Bauteils erfolgen, wodurch größere Fehler korrigiert werden können, als durch Verschieben der Markierung innerhalb des Folienelements.

Nach dieser Korrektur kann das Folienelement in seiner Lage zumindest abschnittsweise fixiert werden, um weitere Einflüsse auf das Folienelement auszuschließen, die zu einer Verschiebung der Markierung gegenüber dem Formwerkzeug oder dem Bauteil führen können.

Wenn die Markierung in ihrer Lage fixiert ist, kann der eigentliche Formvorgang oder Kaschiervorgang beginnen, der darin besteht, dass nach dem Ausrichten der Markierung und nach dem Fixieren des Folienelements diese unter Beibehaltung ihrer ausgerichteten und fixierten Lage in ein Formwerkzeug verformt wird, und dass im Falle eines Kaschiervorganges das Bauteil in das vorgeformte Folienelement eingebracht und mit diesem vereinigt wird.

Diese Verfahrensweise ist immer dann anwendbar, wenn das Folienelement durch mindestens eine Markierung in mindestens zwei Oberflächenbereiche unterteilt ist, wie vorstehend bereits mit anderen Möglichkeiten, die auch hier zutreffen, erläutert.

Eine entsprechend zu Durchführung des erfindungsgemäßen Verfahrens ausgestaltete Vorrichtung zeichnet insbesondere dadurch aus, dass in der Vorrichtung oder Formstation mindestens eine Saugeinrichtung, wie beispielsweise ein Saugbalken, oberhalb des Folienelements höhenverstellbar angeordnet ist und die Vorrichtung bzw. Formstation einen Verschiebeantrieb aufweist, der durch Signale eines auf die Annäherung des Folienelements ansprechenden Sensors steuerbar ist. Die Höhenverstellbarkeit der Saugeinrichtung ist unter anderem vorteilhaft, damit diese der Verformung des Folienelements folgen kann, ohne dass die fixierte Lage der Markierung gestört wird.

Damit von der Saugeinrichtung selbst während der Verformung des Folienelements keine Störungen auf die Lage der Markierung ausgehen können, ist mindestens eine Saugeinrichtung unter einem spitzen oder rechten Winkel zur Folienlängsrichtung verschiebbar angeordnet und weist einen Verschiebeantrieb auf, der durch Signale eines auf die Markierung ansprechenden Sensors steuerbar ist. Hierdurch kann die das Folienelement haltende und die Lage der Markierung fixierende Saugeinrichtung der Verformung des Folienelements während des Formvorganges insoweit nachgeführt werden, als eine Verschiebung der Markierung gegenüber dem Formwerkzeug oder dem zu kaschierenden Bauteil vermieden werden soll.

Weiterhin können in vorteilhafter Ausgestaltung zumindest abschnittsweise oberhalb des Folienelements Saugeinrichtungen in der Vorrichtung bzw. Formstation höhenverschiebbar und/oder unter einem spitzen oder rechten Winkel zur Folienlängsrichtung verschiebbar angeordnet sein, die nach der Korrektur der Markierung eine Lagefixierung des Folienelements herbeiführen. Hierbei handelt es sich um Saugeinrichtungen, die ausschließlich die Funktion der Fixierung des Folienelements ausüben und deshalb vorzugsweise zumindest abschnittsweise angeordnet sind, da häufig eine Fixierung über die gesamte Folienlänge oder Folienbreite innerhalb der Vorrichtung bzw. Formstation nicht notwendig ist.

Wenn alternativ sämtliche Saugeinrichtungen jeweils einen Antrieb für die Höhenverstellung und für die schräge oder rechtwinklige Verschiebung zur Folienlängsrichtung aufweisen, wobei die Höhenverstellung und die Verschiebung durch Steuerung der Antriebe der Verformungsgeschwindigkeit des Folienelements beim Vorformen anpassbar ist, so ist es möglich, auch während des Verformvorgangs des Folienelements dieses zu halten und zu fixieren, ohne dass eine Störung auf die bereits ausgerichtete Lage der Markierung ausgehen könnte.

Mit der vorliegenden Erfindung sind eine allgemeine reck- und umformfreie Handhabung eines Folienelements erheblich verbessert und speziell auch ein partielles bzw. selektives Vorstrecken von Folienbereichen eines Folienelements besonders präzise möglich. Insofern ist es besonders vorteilhaft, wenn Greifer für ein partielles Vorstrecken bzw. auch für ein partielles Nachgleiten ausgelegt bzw. ansteuerbar sind.

Ferner kann die Erfindung nicht nur hinsichtlich Folienzuschnitte angewendet werden, sondern auch hinsichtlich Inline-Verfahren bzw. Inline-Anlage, wobei dann anstelle von Folienzuschnitte auch eine Verarbeitung von der Rolle möglich ist. Aber auch an einer Inline-Anlage können Folienzuschnitte eingelegt werden.

Weitere Merkmale, Effekte und Vorteile vorliegender Erfindung sind anhand anliegender Zeichnung und nachfolgender Beschreibung erläutert, in welchen beispielhaft eine Vorrichtung zum Recken und/oder Formen und/oder kaschierend Auflegen eines Folienelements mit gegenüber einem Trägerrahmen mehraxial im Raum translatorisch und rotatorisch beweglichen Greifern und mit einem gegenüber einem äußeren Lagerrahmenteil zusätzlich noch einaxial im Raum rotatorisch beweglichen Trägerrahmen dargestellt und beschrieben ist. Einige Merkmale des Anspruchs 1 werden in der Figurenbeschreibung nicht explizit erwähnt. Die anhand der Figuren beschriebenen Verfahrensvarianten sind nur dann als Erfindungsgemäß zu betrachten, wenn alle Merkmale des Anspruchs 1 vorhanden sind.

Komponenten, welche in den einzelnen Figuren wenigstens im Wesentlichen hinsichtlich ihrer Funktion übereinstimmen, können hierbei mit gleichen Bezugszeichen gekennzeichnet sein, wobei die Komponenten nicht in allen Figuren beziffert und erläutert sein müssen.

In der Zeichnung zeigen:
- Figur 1: schematisch eine perspektivische Ansicht eines mit räumlich mehraxial beweglichen und individuell ansteuerbaren Greifern ausgerüsteten Trägerrahmens, welcher zusätzlich noch rotatorisch an einem Lagerrahmenteil einer Vorrichtung zum Recken und/oder Formen und/oder kaschierend Auflegen eines Folienelements angeordnet ist;
- Figur 2: schematisch eine weitere perspektivische Ansicht des in der Figur 1 gezeigten Trägerrahmens, jedoch ohne Lagerrahmenteil;
- Figur 3: schematisch eine Seitenansicht einer in den Figuren 1 und 2 gezeigten Greifereinheit mit Greifer;
- Figur 4: schematisch eine perspektivische Aufsicht der in der Figur 3 gezeigten Greifereinheit mit Greifer;
- Figur 5: schematisch eine Aufsicht des in den Figuren 1 bis 4 gezeigten Trägerrahmens mit exemplarisch in die Vorrichtung eingelegtem und mit dem Folienelement zu kaschierendem Bauteil;
- Figur 6: schematisch eine Aufsicht des in den Figuren 1 bis 5 gezeigten Trägerrahmens jedoch alternativ mit insgesamt 12 individuell ansteuerbaren Greifern in maximal geöffneter symmetrischer Stellung;
- Figur 7: schematisch eine andere Aufsicht des in der Figur 6 gezeigten Trägerrahmens mit nach links verlagerten Greifern;
- Figur 8: schematisch eine zusätzliche Aufsicht des insbesondere in der Figur 7 gezeigten Trägerrahmens mit an beiden Langseiten des Trägerrahmens zusätzlich ausgefahrenen Greifen;
- Figur 9: schematisch eine alternative Aufsicht des in den Figuren 6 bis 8 gezeigten Trägerrahmens mit nach rechts verlagerten Greifern; und
- Figur 10: schematisch eine Seitenansicht der in den Figuren 6 bis 9 gezeigten Trägerrahmens während eines Heizvorgangs.

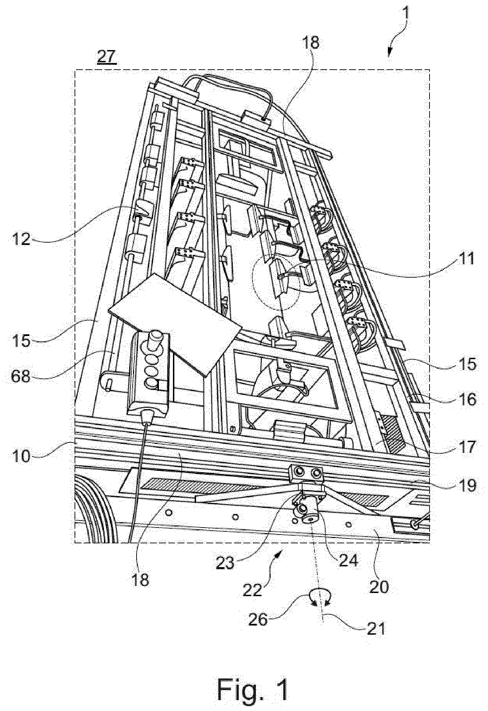

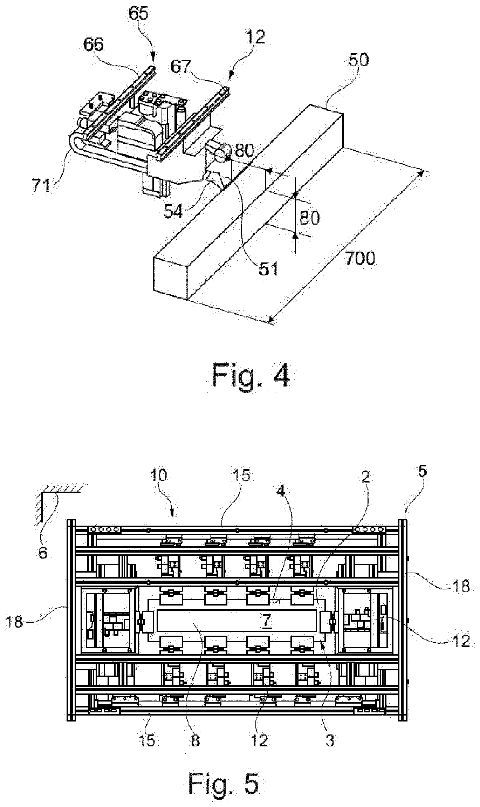

Die in der Figur 1 nur teilweise gezeigte Vorrichtung 1 zum Recken und/oder Formen und/oder kaschierend Auflegen eines Folienelements 2 (siehe beispielhaft nur Figur 5), welches hier als ein Folienzuschnitt 3 vorliegt, formuliert eine Folienelementebene 4 und ist Bestandteil einer hier nicht näher gezeigten Kaschierstation 5 (siehe nur Figur 5) sowie einer hier ebenfalls nicht näher gezeigten Anlage 6 (siehe nur Figur 5) zum Kaschieren eines Bauteils 7 (siehe auch nur Figur 5), wobei in diesem Ausführungsbeispiel das zu kaschierende Bauteil 7 ein Kraftfahrzeug-Innenverkleidungsteil 8 ist.

Die Vorrichtung 1 zeichnet sich insbesondere durch einen Trägerrahmen 10 zum Aufspannen des Folienelements 2 gegenüber dem zu kaschierenden Bauteil 7 oder auch gegenüber einem sonstigen in der Vorrichtung 1 anordenbaren Formwerkzeug (hier nicht dargestellt) aus.

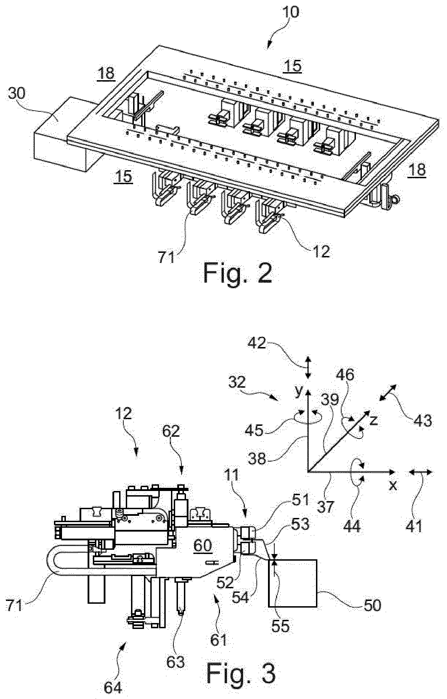

An dem Trägerrahmen 10 sind eine Vielzahl an Greifern 11 (hier nur exemplarisch beziffert) zum Greifen des Folienelements 2 angeordnet, wobei die Greifer 11 jeweils Bestandteil einer kompakten Greifereinheit 12 (siehe insbesondere Figuren 3 und 4) sind. Das Besondere an der Vorrichtung 1 ist, dass die Greifer 11 gegenüber dem Trägerrahmen 10 mehraxial verstellbar angeordnet sind, um das Folienelement 2 an einer Kontur 7A des zu kaschierenden Bauteils 7 oder eines Formwerkzeugs präziser anpassen zu können.

Insbesondere ein definiertes Nachgleiten des Folienelements 2 gelingt mit diesen mehraxial verstellbaren Greifern 11 bzw. Greifereinheiten 12 besonders gut während eines Formprozesses.

Die Bedeutung der mehraxialen Verstellbarkeit wird später noch hinsichtlich der in den Figuren 3 und 4 detailliert gezeigten Greifereinheit 12 näher erläutert.

Der Trägerrahmen 10 besitzt an seinen beiden Langseiten 15 zwei untereinander verbundene Längstraversen 16 und 17 auf (nur exemplarisch beziffert). Diese ersten und zweiten Längstraversen 16 und 17 sind an den Kurzseiten 18 des Trägerrahmens 10 durch Quertraversen 19 zu eben diesem Trägerrahmen 10 untereinander verbunden. In diesem Ausführungsbeispiel zeichnet sich die Vorrichtung 1 neben den mehraxial verstellbar angeordneten Greifern 11 auch noch durch ein äußeres Lagerrahmenteil 20 (nur teilweise und nur in der Figur 1 dargestellt) aus, in welchem vorteilhafterweise der Trägerrahmen 10 wenigstens einaxial um eine Raumachse 16 bzw. Lagerachse verstellbar, das heißt schwenkbar, angeordnet ist, um das Folienelement 2 an die Kontur 7A des zu kaschierenden Bauteils 7 oder eines Formwerkzeugs präziser anpassen zu können.

Das äußere Lagerrahmenteil 20 besitzt zwei Lagereinrichtungen 22 (hier nur exemplarisch beziffert), mit Lageraugen 23, in denen jeweils ein Lagerzapfen 24 (nur exemplarisch beziffert) des Trägerrahmens 10 drehbar gelagert ist. Die Lagerzapfen 24 befinden sich jeweils an der Quertraverse 19 des Trägerrahmens 10, so dass der Trägerrahmen 10 um seine Längsachse, welche mit der Raumachse 21 zusammenfällt, drehbar bzw. schwenkbar in dem äußeren Lagerrahmenteil 20 gelagert ist.

Durch diesen im Wesentlichen durch die Lagereinrichtungen 22 verkörperten Lagermechanismus besitzt der Trägerrahmen 10 zumindest in diesem Ausführungsbeispiel einen Freiheitsgrad 26, nämlich die Rotation um die Raumachse 21, so dass sämtliche an dem Trägerrahmen 10 montierten Greifereinheiten 12 mit ihren Greifern 11 gleichzeitig und gemeinsam ihre Raumlage im Raum 27 und speziell gegenüber der Kontur 7A des zu kaschierenden Bauteils 7 verändern können, wodurch ein Steuerungs- bzw. Regelungsaufwand an der Vorrichtung 1 verringert werden kann.

An dieser Stelle sei nochmals darauf hingewiesen, dass der äußere Lagerrahmen bei einer alternativen Vorrichtung bzw. einem alternativen Einsatzzweck auch ohne den vorstehend beschriebenen Lagermechanismus betrieben werden könnte.

Wie gemäß der Darstellung nach der Figur 2 schematisch dargestellt umfasst die Vorrichtung 1 eine Controllereinheit 30, mittels welcher insbesondere die mehraxiale Verstellbarkeit der Greifer 11 sowie des Trägerrahmens 10 gesteuert bzw. geregelt werden kann.

Der Trägerrahmen 10 ist nach Figur 2 ohne das äußere Lagerrahmenteil 20 und dem Lagermechanismus abgebildet.

Anhand der Darstellungen gemäß der Figuren 3 und 4 ist eine an dem Trägerrahmen 10 montierte Greifereinheit 12 schematisch auch noch einmal hinsichtlich seiner mehraxialen Verstellbarkeit und die sich hierdurch ergebenden Freiheitsgrade dargestellt, wobei hierzu hilfsweise das nur in der Figur 3 dargestellte Koordinatensystem 32 eingeführt ist. Insbesondere der Greifer 11 kann demnach jeweils translatorisch entlang einer ersten Greiferraumachse 37 (x-Achse), einer zweiten Greiferraumachse 38 (y-Achse) sowie entlang einer dritten Greiferraumachse 39 (z-Achse) translatorisch verstellt bzw. verlagert werden, wodurch sich drei translatorische Freiheitsgrade, nämlich ein erster Freiheitsgrad 41, ein zweiter Freiheitsgrad 42 und eine dritter Freiheitsgrad 43 hinsichtlich des Greifers 11 ergeben.

Zusätzlich kann der Greifer um die jeweilige Greiferraumachse 37, 38 bzw. 39 rotatorisch verstellt bzw. verlagert werden, wodurch sich drei rotatorische Freiheitsgrade bzgl. des Greifers 11 ergeben, nämlich ein vierter Freiheitsgrad 44, ein fünfter Freiheitsgrad 45 sowie ein sechster Freiheitsgrad 46.

Durch diese mehraxiale Verstellbarkeit des Greifers 11 ergibt sich für jeden der Greifer 11 an der Vorrichtung 1 ein individueller Greiferaktionsraum 50, welcher in den Figuren 3 und 4 schematisch eingezeichnet ist.

In diesem Ausführungsbeispiel ergibt sich für jeden der Greifer 11 ein Greiferaktionsraum 50 mit den Maßen 80 mm x 80 mm x 700 mm, wobei die Maße des Greiferaktionraums 50 von Trägerrahmen 10 zu Trägerrahmen 10 unterschiedlich gewählt und damit auf das jeweilige zu kaschierende Bauteil 7 bzw. Formwerkzeug (nicht dargestellt) individuell abgestimmt sein kann.

Der Greifer 11 zeichnet sich in diesem Ausführungsbeispiel durch ein oberes Greiferelement 51 und ein unteres Greiferelement 52 aus, wobei das obere und das untere Greiferelement 51 und 52 durch einen hier nicht weiter gezeigten Greifmechanismus aufeinander zu bzw. voneinander weg bewegt werden können, so dass der Greifer 11 insgesamt eine Greifbewegung gegenüber dem Folienelement 2 vollziehen kann.

An den Greiferelementen 51 und 52 sind fest aber lösbar und damit Greifflächenteile 53 bzw. 54 auswechselbar angebracht, welche in unmittelbaren Wirkkontakt mit dem Folienelement 2 stehen und somit Greifkräfte 55 auf das Folienelement 2 ausüben.

Mittels dieser auswechselbaren Greifflächenteile kann der Greifer 11 individuell an das zu verarbeitende Folienmaterial des jeweiligen Folienelements 2 angepasst werden, falls dies erforderlich ist.

Um die hohe Beweglichkeit bzw. Verstell- bzw. Verlagerbarkeit des jeweiligen Greifers 11 zu ermöglichen, umfasst die Vorrichtung 1 die Greifereinheiten 12 mit folgendem Aufbau, deren wesentliche Funktionen im Folgenden beispielhaft beschrieben sind.

Die Greifereinheit 12 besitzt einen Ausfahr- und Drehmechanismus 60, mittels welchem der Greifer 11 einerseits translatorisch entlang der ersten Greiferraumachse 37 bewegt werden kann, wodurch der erste Freiheitsgrad 41 realisiert ist.

Andererseits kann der Greifer 11 mittels dieses Ausfahr- und Drehmechanismus 60 sogleich auch rotatorisch um diese erste Greiferraumachse 37 bewegt werden, also gedreht werden, wodurch der vierte Freiheitsgrad 44 verwirklicht ist.

Mittels des vierten Freiheitsgrads 44 ist gewährleistet, dass der Greifer 11 gegenüber der Folienelementebene 4 drehbar ist.

Dieser Ausfahr- und Drehmechanismus 60 kann unterschiedlichst ausgestaltet sein und befindet sich in einen Kopfteil 61 der Greifereinheit 12.

Ferner verfügt die Greifereinheit 12 über einen Horizontal-Schwenkmechanismus 62 mit einer Horizontal-Schwenkachse 63, welche in Richtung der zweiten Greiferraumachse 38 verläuft.

Mittels des Horizontal-Schwenkmechanismus 62 kann in diesem Ausführungsbeispiel das gesamte Kopfteil 61 und damit auch der Ausfahr- und Drehmechanismus 60 des Greifers 11 um die Horizontal-Schwenkachse 63 geschwenkt werden, so dass hierdurch der fünfte Freiheitsgrad 45 ermöglicht ist.

Die translatorische Verstell- bzw. Verlagerbarkeit des Greifers 11 ist durch einen Hebe-/Senkmechanismus 64 bewerkstelligt, so dass der Greifer 11 translatorisch entlang der zweiten Greiferraumachse 38 bewegbar bzw. verstell- bzw. verlagerbar ist. Insofern ist hierdurch der zuvor beschriebene zweite Freiheitsgrad 42 realisiert. Mittels des zweiten Freiheitsgrads 42 ist sichergestellt, dass der Greifer 11 gegenüber der Folienelementebene 4 individuell höheneinstellbar ist.

Darüber hinaus ist die Greifereinheit 12 mittels eines Schlittenteils 65 (siehe Figur 4) umfassend zwei Schlittenelemente 66 und 67 (siehe Figur 4) translatorisch in komplementär ausgestalteten Schienen (nicht gezeigt) des Trägerrahmens 10 befestigt.

Mittels des Schlittenteils 13 ist die Greifereinheit 12 translatorisch entlang der dritten Greiferraumachse 39 bewegbar bzw. verstell- bzw. verlagerbar, wodurch der vorstehend erläuterte dritte Freiheitsgrad 43 formuliert ist.

Der sechste Freiheitsgrad 46 wird in diesem Ausführungsbeispiel durch die Schwenkbarkeit der Greifereinheit 12 um eine Schwenkachse 68 (siehe Figur 1) gewährleistet, wozu die Greifereinheit 12 des Weiteren einen Vertikalschwenkmechanismus (hier nicht gezeigt) umfasst.

Kumulativ oder alternativ kann der sechste Freiheitsgrad 46 auch durch die Drehbewegung des Trägerrahmens 10 um die Raumachse 21 erzielt werden.

Insbesondere durch den sechsten Freiheitsgrad 46 ist gewährleistet, dass der Greifer 11 insbesondere gegenüber dem zu kaschierenden Bauteil 7 geneigt werden kann.

In diesem Ausführungsbeispiel verlaufen die Raumachse 21 bzw. die Raumachse 21 des Trägerrahmens 10 und die dritte Greiferraumachse 39 fluchtend bzw. parallel zueinander.

Durch den zuvor beschriebenen Aufbau der Greifereinheit 12 sowie in dessen Funktionsweise ist an der Vorrichtung 1 eine Vielzahl an Verstelleinrichtungen 70 zum räumlichen Verstellen der Greifer 11 ausgeführt.

Es versteht sich, dass diese Verstelleinrichtungen 70 unterschiedlichst motorisch ansteuerbar sind.

Insofern kann insbesondere die jeweilige Greifereinheit 12 zumindest einen oder mehrere elektrischen Antriebsmotoren zum Treiben der Greifer 11 umfassen, so dass diese Greifer 11 einerseits mehraxial verstellt werden können, wie vorstehend erläutert, und andererseits individuell das jeweilige Folienelement 2 ergreifen können.

Insbesondere der hier vorstehend beschriebene Greifmechanismus kann derart ausgelegt sein, dass mittels der Greifer 11 jeweils individuell Greifkräfte 55 auf das Folienelement 2 ausgeübt werden können, um einerseits ein sicheres Festhalten des Folienelements 2 zu ermöglichen, aber andererseits auch ein Gleiten des Folienelements 2 zwischen den Greifflächenteilen 53 und 54 ermöglicht ist, wenn dies erforderlich erscheint.

Die Verstelleinrichtungen 70 bzw. die hier nicht weiter gezeigten Antriebsmotoren stehen in direktem Wirkkontakt mit der Controllereinheit 30, welche über ein Bussystem 71 (nur exemplarisch in den Figuren 2, 3 und 4 beziffert) in der Lage ist, die erforderlichen Bewegungen aller Greifer 11 und des Trägerrahmens 10 individuell zu kontrollieren, so dass das Folienelement 2 in gewünschter Weise behandelt bzw. gereckt und umgeformt werden kann.

Insbesondere kann mittels der Controllereinheit 30 der Greifer 11 auch zeitlich individuell angesteuert bzw. individuell beschleunigt usw. werden.

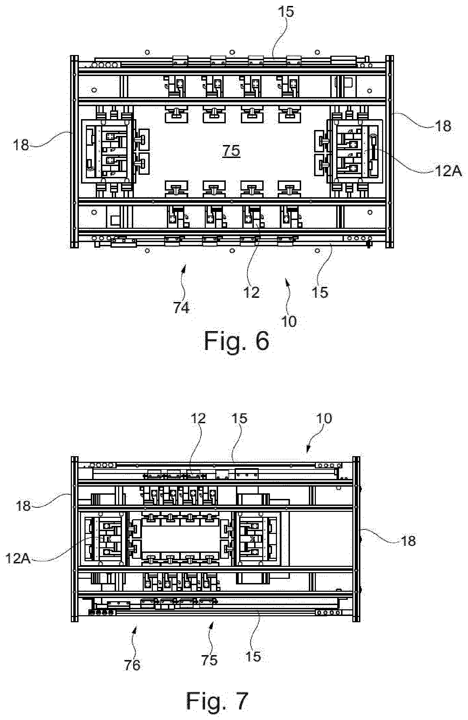

Gemäß den Darstellungen nach den Figuren 6 bis 10 ist die Vorrichtung 1 in einem weiteren Ausrüstungszustand gezeigt, bei welchem an den Kurzseiten 18 des Trägerrahmens 10 jeweils eine Doppelgreifereinheit 12A angeordnet ist anstatt einer einzelnen Greifereinheit 12, wie in den Figuren 1, 2 und 5 gezeigt.

Gemäß der Darstellung nach der Figur 6 befindet sich die Vorrichtung 1 in einer maximal geöffneten symmetrischen Stellung 74, in welcher ein maximaler Folienelementaufnahmeraum 75 erzeugt ist.

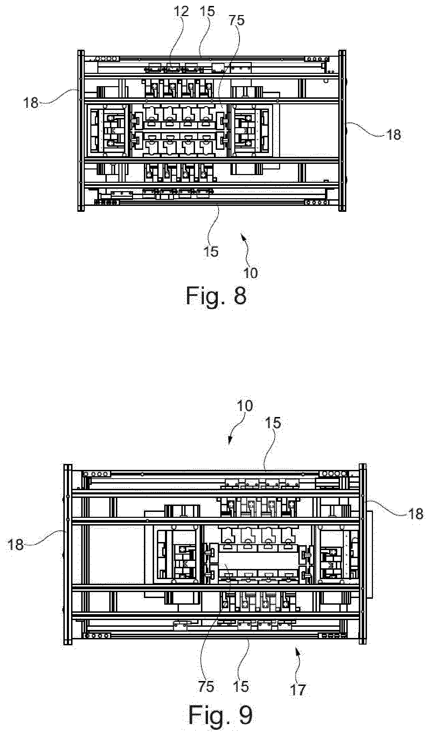

Gemäß der Darstellung nach der Figur 7 sind die Greifereinheiten 12 bzw. 12A in den linken unteren Eckbereich 76 des Folienelementaufnahmeraums 75 verfahren, wobei gemäß der Darstellung nach der Figur 8, die in Greifereinheiten 12 an den Langseiten 15 des Trägerrahmens 10 hinsichtlich ihrer jeweiligen ersten Greiferraumachsen 37 (siehe beispielhaft Figur 3) ausgefahren sind, wodurch ersichtlich wird, das nahezu jeder Bereich des Folienelementaufnahmeraums 75 individuell durch eine der Greifereinheiten 12 bzw. 12 A erreichbar ist.

Gemäß der Darstellung nach der Figur 9 sind die Greifereinheiten 12 bzw. 12 A beispielhaft in den rechten unteren Eckbereich 77 verfahren, wobei die Greifer 11 an der unteren Langseite 15 wieder in die Greifereinheiten 12 eingefahren sind.

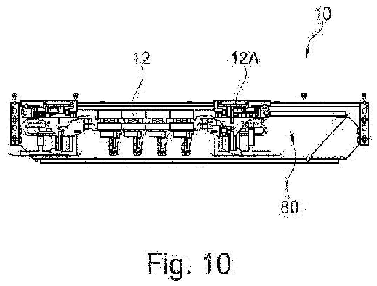

Gemäß der Darstellung nach der Figur 10 befindet sich die Vorrichtung 1 beispielhaft in einer Heizphase, in welcher das zu reckende und umzuformende bzw. zu kaschierende Folienelement 2 für die nachfolgende Behandlung bzw. für den nachfolgenden Aufkaschierprozess mittels einer Heizeinrichtung 80 thermisch vorbereitet wird.

An dieser Stelle sei explizit nochmals darauf hingewiesen, dass die Merkmale der vorstehend bzw. in den Ansprüchen und/oder Figuren beschriebenen Lösungen gegebenenfalls auch kombiniert werden können, um die erläuterten Merkmale, Effekte und Vorteile entsprechend kumuliert umsetzen bzw. erzielen zu können.

Es versteht sich, dass es sich bei dem vorstehend erläuterten Ausführungsbeispiel, insbesondere hinsichtlich seiner abweichenden Abwandlungen, lediglich um erste Ausgestaltungen der erfindungsgemäßen Vorrichtung handelt. Insofern beschränkt sich die Ausgestaltung der Erfindung nicht auf dieses Ausführungsbeispiel.

Sämtliche in den Anmeldungsunterlagen offenbarten Merkmale werden als erfindungswesentlich beansprucht, sofern sie einzeln oder in Kombination gegenüber dem Stand der Technik neu sind.

### LISTE DER VERWENDETEN BEZUGSZEICHEN

- 1: Vorrichtung
- 2: Folienelement
- 3: Folienzuschnitt
- 4: Folienelementebene
- 5: Kaschierstation
- 6: Anlage
- 7: zu kaschierendes Bauteil
- 7A: Kontur
- 8: Kraftfahrzeug-Innenverkleidungsteil
- 10: Trägerrahmen
- 11: Greifer
- 12: Greifereinheit
- 12A: Doppelgreifereinheit
- 15: Langseiten
- 16: erste Längstraverse
- 17: zweite Längstraverse
- 18: Kurzseiten
- 19: Quertraversen
- 20: äußeres Lagerrahmenteil
- 21: Raumachse bzw. Lagerachse
- 22: Lagereinrichtungen
- 23: Lagerauge
- 24: Lagerzapfen
- 26: Freiheitsgrad des Trägerrahmens
- 27: Raum
- 30: Controllereinheit
- 32: Koordinatensystem
- 36: Koordinatensystem
- 37: erste Greiferraumachse (x-Achse)
- 38: zweite Greiferraumachse (y-Achse)
- 39: dritte Greiferraumachse (z-Achse)
- 41: erster Freiheitsgrad
- 42: zweiter Freiheitsgrad
- 43: dritter Freiheitsgrad
- 44: vierter Freiheitsgrad
- 45: fünfter Freiheitsgrad
- 46: sechster Freiheitsgrad
- 50: Greiferaktionsraum
- 51: oberes Greiferelement
- 52: unteres Greiferelement
- 53: erstes Greifflächenteil
- 54: zweites Greifflächenteil
- 55: Greifkräfte
- 60: Ausfahr- und Drehmechanismus
- 61: Kopfteil
- 62: Horizontal-Schwenkmechanismus
- 63: Horizontal-Schwenkachse
- 64: Hebe-/Senkmechanismus
- 65: Schlittenteil
- 66: erstes Schlittenelement
- 67: zweites Schlittenelement
- 68: Schwenkachse
- 70: individuelle Verstelleinrichtungen
- 71: Bussystem
- 74: maximal geöffnete symmetrische Stellung
- 75: maximaler Folienelementaufnahmeraum
- 76: linker unterer Eckbereich
- 77: rechter unterer Eckbereich
- 80: Heizeinrichtung

## Patentansprüche

1. Verfahren zum Formen und/oder kaschierend Auflegen eines Folienelements (2), bei welchem das Folienelement (2) mittels eines Trägerrahmens (10) gegenüber einem Formwerkzeug oder einem zu kaschierenden Bauteil (7) gehalten wird, und bei welchem das Formwerkzeug oder das zu kaschierende Bauteil (7) durch die von dem Folienelement (2) erzeugte Folienelementebene (4) bewegt wird, um eine Kontur (7A) des Formwerkzeugs oder des zu kaschierenden Bauteils (7) auf das Folienelement (2) zu übertragen, wobei mindestens eine Markierung des erwärmten Folienelements (2) innerhalb einer Vorrichtung (5) durch einen dieser Markierung zugeordneten am Einlauf und einen dieser Markierung zugeordneten am Auslauf der Vorrichtung (5) angeordneten Sensor erfasst wird, worauf die Regelsignale der Sensoren eine Relativverschiebung von Folienelement (2) und dem Formwerkzeug oder dem zu kaschierenden Bauteil innerhalb der Vorrichtung (5) herbeiführen, **dadurch gekennzeichnet, dass** wenn das Folienelement (2) im Arbeitsbereich der Vorrichtung (5) eingespannt und die Markierung gegenüber dem Formwerkzeug oder dem zu kaschierenden Bauteil ausgerichtet ist, das Folienelement (2) einem Verformvorgang unterworfen wird, wobei die Lage der Markierung vor, während und nach dem Verformvorgang durch die Sensoren überwacht wird und bei Bedarf korrigiert wird.

2. Verfahren nach Anspruch 1, wobei das erwärmte Folienelement (2) durch thermisches Vorbereiten eines umzuformenden oder zu kaschierenden Folienelements (2) mittels einer Heizeinrichtung (80) bereitgestellt wird.

3. Verfahren nach einem der vorherigen Ansprüche, wobei das Folienelement (2) durch die Markierung in mindestens zwei Oberflächenbereiche unterteilt ist.

4. Verfahren nach einem der vorherigen Ansprüche, wobei zuvor die Lage der Markierung mittels eines weiteren Sensors erfasst wird und das Folienelement (2) in Bezug auf eine Transporteinrichtung ausgerichtet wird.

5. Verfahren nach Anspruch 4, wobei beim Ausrichten der Lage der Markierung in Bezug auf die Transporteinrichtung bereits durch die Transportvorrichtung eine Zuordnung von dem markierten Folienelement (2) zu dem Formwerkzeug oder dem zu kaschierenden Bauteil herbeigeführt wird, und wobei dann innerhalb der Vorrichtung (5) nach dem Erwärmen des Folienelements (2) eine genaue Ausrichtung durch die am Einlauf und am Auslauf der Vorrichtung (5) angeordnete Sensoren herbeigeführt wird.

6. Verfahren nach einem der vorhergehenden Ansprüche, wobei die Korrektur der Lage der Markierung durch Festhalten des Folienelements (2) in einem kontrollierten Bereich und entsprechende Verschiebung des Folienelements (2) zusammen mit Festhaltemitteln, insbesondere Greifern, bei unveränderter Einspannung erfolgt.

7. Verfahren nach einem der vorhergehenden Ansprüche, wobei die Korrektur der Lage der Markierung durch Festhalten des Folienelements (2) im kontrollierten Bereich mittels der Festhaltemittel und entsprechende Verschiebung des Folienelements (2) in sich bei unveränderter Einspannung erfolgt.

8. Verfahren nach Anspruch 7, wobei die Verschiebung des Folienelements (2) in sich dadurch erfolgt, dass aufgrund der Verformbarkeit des Folienelements (2) die Markierung innerhalb des Folienelements (2) verschoben wird, ohne dass der gesamte Folienbereich verschoben wird.

9. Verfahren nach einem der vorhergehenden Ansprüche, wobei die Korrektur der Lage der Markierung durch Verschieben des Formwerkzeugs oder des zu kaschierenden Bauteils erfolgt.

## Claims

1. Method for molding and/or laminating a film element (2), in which the film element (2) is held by means of a carrier frame (10) by means of a mold or a component (7) to be laminated, and in which the mold or the component (7) to be laminated is moved through the foil element plane (4) created by the film element (2), in order to transfer a contour (7A) of the molding tool or of the component (7) to be laminated to the film element (2), wherein at least one marking of the heated film element (2) being detected within a device (5) by a sensor assigned to this marking at the inlet and a sensor assigned to this marking at the outlet of the device (5), whereupon the control signals of the sensors bring about a relative displacement of the film element (2) and the molding tool or the component to be laminated within the device (5), **characterized in that** when the film element (2) is clamped to the working area of the device (5) and the marking is aligned with respect to the molding tool or the component to be laminated, the film element (2) is subjected to a molding process, wherein the position of the marking being monitored by the sensors before, during and after the molding process and being corrected if necessary.

2. Method according to claim 1, wherein the heated film element (2) is provided by thermal preparation of a film element (2) to be molded or laminated by means of a heating device (80).

3. Method according to one of the preceding claims, wherein the film element (2) is divided into at least two surface areas by the marking.

4. Method according to one of the preceding claims, wherein the position of the marking is detected previously by means of a further sensor and the film element (2) is aligned with respect to a transport facility.

5. Method according to claim 4, wherein when aligning the position of the marking with respect to the transport facility, an allocation of the marked film element (2) to the mold or the component to be laminated is already caused by the transport facility, and wherein an exact alignment is then caused within the device (5) after heating of the film element (2) by the sensors arranged at the inlet and outlet of the device (5).

6. Method according to one of the preceding claims, wherein the correction of the position of the marking is carried out by holding the film element (2) in a controlled area and corresponding displacement of the film element (2) together with holding tools, in particular grabs, with unchanged clamping.

7. Method according to one of the preceding claims, wherein the correction of the position of the marking is carried out by holding the film element (2) in the controlled area by means of the holding means and corresponding displacement of the film element (2) in itself with unchanged clamping.

8. Method according to claim 7, wherein the displacement of the film element (2) in itself takes place due to the ductility of the film element (2), displacing the marking within the film element (2) without the entire foil area being moved.

9. Method according to one of the preceding claims, wherein the correction of the position of the marking is carried out by moving the mold or the component to be laminated.

## Revendications

1. Procédé de formage et/ou de pose de revêtement d'un élément en feuille (2), dans lequel l'élément en feuille (2) est maintenu au moyen d'un cadre de support (10) par rapport à un outil de formage ou à un composant (7) à revêtir, et dans lequel l'outil de formage ou le composant (7) à revêtir est déplacé à travers le plan d'élément en feuille (4) généré par l'élément en feuille (2), pour transférer un contour (7A) de l'outil de formage ou du composant (7) à doubler sur l'élément en feuille (2), au moins un marquage de l'élément en feuille (2) chauffé étant détecté à l'intérieur d'un dispositif (5) par un capteur associé à ce marquage et disposé à l'entrée et un capteur associé à ce marquage et disposé à la sortie du dispositif (5), après quoi les signaux de régulation des capteurs provoquent un déplacement relatif de l'élément de film (2) et de l'outil de formage ou de la pièce à doubler à l'intérieur du dispositif (5), **caractérisé en ce que** lorsque l'élément de film (2) est serré dans la zone de travail du dispositif (5) et que le marquage est orienté par rapport à l'outil de formage ou à la pièce à doubler, l'élément de film (2) est soumis à un processus de formage, la position du marquage étant surveillée par les capteurs avant, pendant et après le processus de formage et étant corrigée si nécessaire.

2. Procédé selon la revendication 1, dans lequel l'élément de film (2) chauffé est fourni par préparation thermique d'un élément de film (2) à transformer ou à contrecoller au moyen d'un dispositif de chauffage (80).

3. Procédé selon l'une des revendications précédentes, dans lequel l'élément de film (2) est divisé en au moins deux zones de surface par le marquage.

4. Procédé selon l'une des revendications précédentes, dans lequel la position du marquage est préalablement détectée au moyen d'un autre capteur et l'élément de film (2) est orienté par rapport à un dispositif de transport.

5. Procédé selon la revendication 4, dans lequel, lors de l'orientation de la position du marquage par rapport au dispositif de transport, une association de l'élément de film (2) marqué à l'outil de moulage ou à la pièce à doubler est déjà effectuée par le dispositif de transport, et dans lequel ensuite, à l'intérieur du dispositif (5), après le chauffage de l'élément de film (2), une orientation précise est effectuée par les capteurs disposés à l'entrée et à la sortie du dispositif (5).

6. Procédé selon l'une quelconque des revendications précédentes, dans lequel la correction de la position du repère est effectuée en maintenant l'élément en feuille (2) dans une zone contrôlée et en déplaçant de manière correspondante l'élément en feuille (2) conjointement avec des moyens de maintien, notamment des pinces, sans modifier le serrage.

7. Procédé selon l'une quelconque des revendications précédentes, dans lequel la correction de la position du repère est réalisée par maintien de l'élément de film (2) dans la zone contrôlée à l'aide des moyens de maintien et déplacement correspondant de l'élément de film (2) sur lui-même sans modification du serrage.

8. Procédé selon la revendication 7, dans lequel le déplacement de l'élément de film (2) sur lui-même s'effectue en déplaçant le marquage à l'intérieur de l'élément de film (2) en raison de la déformabilité de l'élément de film (2), sans déplacer la totalité de la zone de film.

9. Procédé selon l'une des revendications précédentes, dans lequel la correction de la position du marquage est effectuée par déplacement de l'outil de formage ou de l'élément à contrecoller.
